# EUROPÄISCHE PATENTANMELDUNG

(11) **EP 0 858 783 A2**
(43) Veröffentlichungstag der Anmeldung: **19.08.1998**
(21) Anmeldenummer: 98101682.7
(22) Anmeldetag: 31.01.1998
(51) Int. Cl.: A61C 3/025

(54) **Strahlgerät zur Oberflächenbehandlung von Zähnen**

(30) Priorität: 07.02.1997 DE 19704567
(71) Anmelder: Kersten, Uwe, Dr., 40764 Langenfeld (DE); Kersten, Olaf, Dr., 47802 Krefeld (DE)
(72) Erfinder: Kersten, Uwe, Dr., 40764 Langenfeld (DE); Kersten, Olaf, Dr., 47802 Krefeld (DE)
(74) Vertreter: Sparing - Röhl - Henseler Patentanwälte

(57) **Zusammenfassung**

Die Erfindung betrifft ein Strahlgerät zur Oberflächenbehandlung von Zähnen mit einem getrennt an eine Druckluftzufuhr (3) und eine Wasserzufuhr (4) anschließbaren Handstück (1) zum Austragen von pulverförmigem Strahlmittel mittels Druckluft aus einer düsenartigen Austrittsöffnung (12), benachbart zu der zusätzlich eine düsenartige Austrittsöffnung (14) für einen Wasserstrahl angeordnet ist, wobei die Austrittsöffnungen (12, 14) in bezug zur Achse des Handstücks (1) seitlich gerichtet sind. Das Handstück (1) trägt ein langgestrecktes Kopfstück (9), das an seinem freien Ende eine Scheibe (10) aufweist, in der die Austrittsöffnungen (12, 14) angeordnet sind und die mit einem die Austrittsöffnungen (12, 14) umgebenden, an die zu reinigenden Zähne anlegbaren Spritzschutz (16) versehen ist.

## Beschreibung

Die Erfindung betrifft ein Strahlgerät zur Oberflächenbehandlung von Zähnen nach dem Oberbegriff des Anspruchs 1.

Ein derartiges Strahlgerät, wie es zum Entfernen von Plaque und Verfärbungen von Zahnoberflächen verwendet wird, ist beispielsweise aus DE 34 39 584 C2 bekannt. Hierbei wird ein pulverförmiges Strahlmittel, etwa ein wasserlösliches Salz wie Natriumhydrogencarbonat, mittels Druckluft aus einem düsenartigen Fortsatz eines mit einem Wasser- und einem Druckluftanschluß versehenen Handstücks, das einen Strahlmittelbehälter enthält, benachbart zum Wasser ausgetragen. Bei Verwendung eines derartigen Geräts treten jedoch häufig Wassernebel und -strahlen, mit im Mund befindlichen Substanzen bzw. Mikroorganismen kontaminiert, aus der Mundhöhle aus, so daß Zahnärzte sich mit einer entsprechenden Spritzhaube ausrüsten, bevor sie Einen Patienten mit einem derartigen Gerät behandeln. Abgesehen davon wäre eine Verwendung des Geräts für mehrere Personen ohne zwischengeschaltete Reinigung selbst im häuslichen Gebrauch unhygienisch.

Ein ähnliches Gerät ist aus DE 32 12 207 A1 bekannt, bei dem ein Strahlmittelbehälter getrennt vom Handstück angeordnet ist und Wasser, Druckluft und Strahlmittel aus einer gemeinsamen Düse austreten. Die vorstehend genannten Nachteile sind auch hier vorhanden.

Aufgabe der Erfindung ist es, ein Strahlgerät nach dem Oberbegriff des Anspruchs 1 zu schaffen, bei dem wirksam ein Umherspritzen von Wasser verhindert und die hygienische Verwendung des Geräts für mehrere Personen ermöglicht wird.

Diese Aufgabe wird entsprechend dem kennzeichnenden Teil des Anspruchs 1 gelöst.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

Fig. 1 zeigt perspektivisch ein Handstück eines Spritzgeräts zur Oberflächenbehandlung von Zähnen.

Fig. 2 bis 9 zeigen verschiedene Ausführungsformen eines Kopfstücks für das Spritzgerät in Seitenansicht bzw. Frontansicht.

Das dargestellte Spritzgerät umfaßt ein im wesentlichen zylindrisches Handstück 1, in das an einem Ende von einem flexiblen Mantel 2 umgebene Versorgungsleitungen eingeführt sind. Letztere umfassen eine flexible Druckluftleitung 3, eine flexible Wasserleitung 4 und ein zwei oder mehradriges Elektrokabel 5, das mit einem Schalter 6 am Außenmantel des Handstücks 1 zur Zu- und Abschaltung der Wasser- und Druckluftzufuhr gekoppelt ist.

Das Handstück 1 besitzt am gegenüberliegenden Ende im Anschluß an einen kegelstumpfförmigen Abschnitt 7 einen Aufsteckfortsatz 8 für ein langgestrecktes, schmales Kopfstück 9. Das Kopfstück 9 endet in einer Scheibe 10. Die im wesentlichen rechteckige, an den Ecken abgerundete, flache und hohle Scheibe 10 besitzt etwa mittig in ihrer Seitenfläche 11 eine düsenartige Austrittsöffnung 12 für mit Strahlmittel beladene Druckluft, wobei die Austrittsöffnung 12 über eine sich durch die Scheibe 10 und das Kopfstück 9 erstreckende Leitung 13 an eine entsprechende Leitung im Handstück 1 angeschlossen ist. Die Austrittsöffnung 12 ist von einer düsenartigen Austrittsöffnung 14 für einen Wasserstrahl umgeben. Die Austrittsöffnung 14 ist über einen die Leitung 13 umgebenden Hohlraum 15 im Kopfstück 9 mit einer entsprechenden Leitung im Handstück 1 verbunden.

Die Scheibe 10 ist mit einem mit Abstand um die Austrittsöffnungen 12, 14 umgebenden, weichen Spritzschutz 16 aus physiologisch unbedenklichem Material versehen. Die Scheibe 10 und deren Spritzschutz 16 haben im wesentlichen die Größe eines üblichen Zahnbürstenkopfes.

Die Austrittsöffnungen 12, 14, die auch nebeneinander anstatt konzentrisch zueinander und ferner mehrfach angeordnet sein können, sind derart ausgerichtet, daß die hiervon abgegebenen Strahlen sich verwirbeln und vernebeln.

Im Gebrauch wird das Strahlgerät mit dem Spritzschutz 16 an die zu behandelnden Zähne (bzw. gegebenenfalls teilweise auch an das Zahnfleisch) angelegt, der Schalter 6 betätigt und das Kopfstück 9 mit dem Spritzschutz 16 an den Zähnen entlang geführt. Auf diese Weise treten Wassernebel und -spritzer, falls überhaupt, aus dem Spritzschutz 16 nur sehr gedämpft aus, so daß die Flüssigkeit und das Strahlmittel in der Mundhöhle verbleiben.

Das Kopfstück 9 ist gegebenenfalls über eine Steckverbindung auswechselbar auf das Handstück 1 aufsteckbar, so daß es nach jeweiligem Gebrauch abgenommen und gegebenenfalls durch ein anderes Kopfstück 9 - für eine andere Person - ersetzt werden kann.

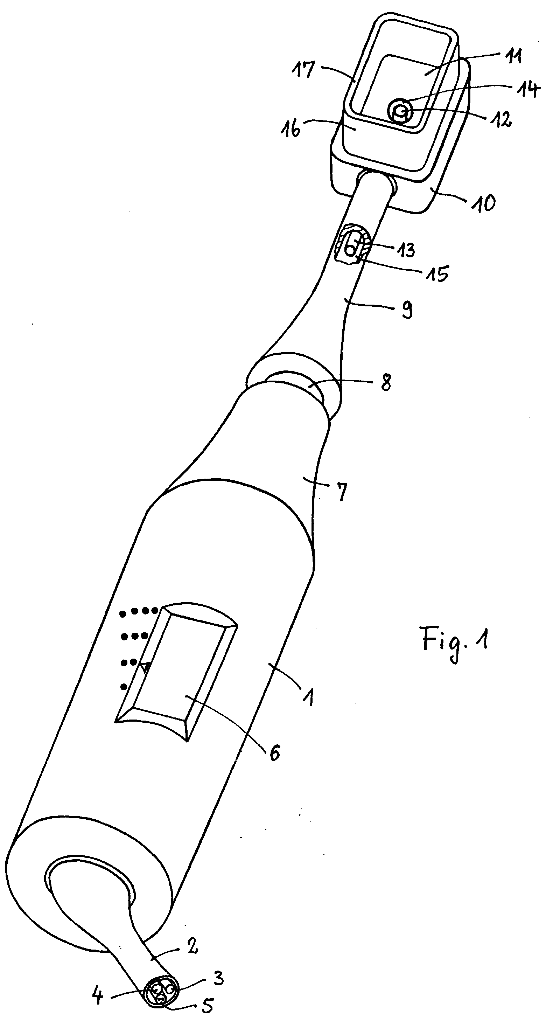

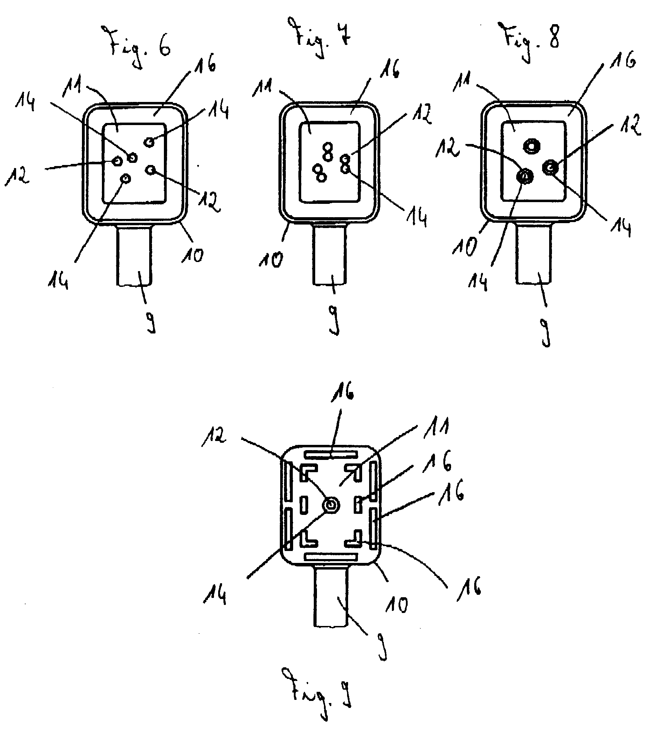

Der Spritzschutz 16 kann, wie in den Fig. 1 bis 4 und 6 bis 8 dargestellt, aus einer gummielastischen, umgebenden Schürze bestehen, die gegebenenfalls einen glatten umlaufenden Rand 17 oder auch einen zumindest an den Längsseiten gewellten oder gezackten Rand 17 aufweisen, wobei letzteres ein leichtes Abfließen von Flüssigkeit unterstützt.

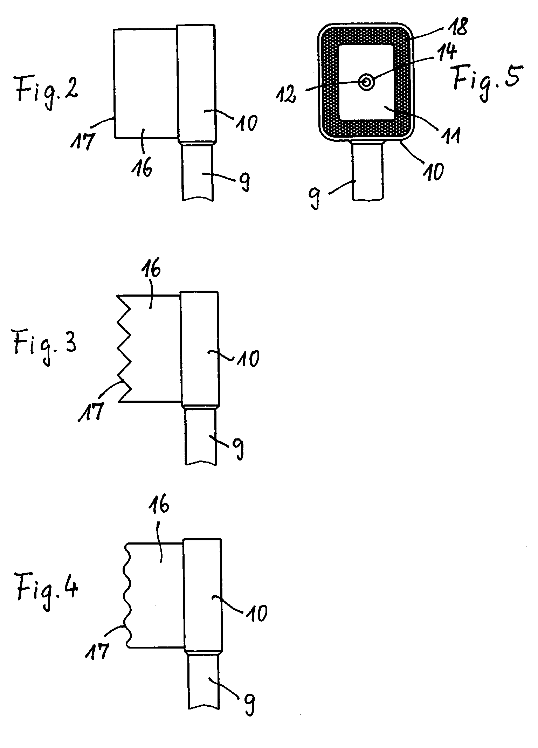

Der Spritzschutz 16 kann aber auch aus einer Vielzahl von Borsten 18 bestehen, die ein- oder mehrreihig umlaufend zahnbürstenartig angeordnet sind (Fig. 5). Hierdurch läßt sich das Strahlgerät zugleich, gegebenenfalls unter Abschaltung der Wasser- und/oder Strahlmittelzufuhr, als Zahnbürste verwenden.

Ferner kann der Spritzschutz 16 aus mehreren labyrinthartig geschachtelten Schürzenabschnitten bestehen, vgl. Fig. 9.

Die Scheibe 10 kann eine lösbar befestigte Abdeckplatte tragen, an der der Spritzschutz 16 befestigt ist, so daß dieser auswechselbar ist, ohne das gesamte Kopfstück 9 auswechseln zu müssen.

Das Handstück 1 kann einen Strahlmittelbehälter analog zur DE 34 39 584, bei der das Strahlmittel in einer Wirbelkammer mit Druckluft verwirbelt wird, enthalten, oder es kann ein getrennter Strahlmittelbehälter etwa entsprechend DE 32 12 207 A1 vorgesehen sein, so daß dem Handstück 1 mit Strahlmittel beladene Drcukluft zugeführt wird.

Das Kopfstück 9 kann gegebenenfalls in bezug auf das Handstück 1 eine oszillierende Bewegung durchführen, um eine möglichst optimale Zahnpflege zu erreichen.

Die Stärke des Reinigungsstrahls kann gegebenenfalls über den Schalter 6 einstellbar sein.

## Patentansprüche

1. Strahlgerät zur Oberflächenbehandlung von Zähnen mit einem getrennt an eine Druckluftzufuhr (3) und eine Wasserzufuhr (4) anschließbaren Handstück (1) zum Austragen von pulverförmigem Strahlmittel mittels Druckluft aus wenigstens einer düsenartigen Austrittsöffnung (12), benachbart zu der zusätzlich wenigstens eine düsenartige Austrittsöffnung (14) für einen Wasserstrahl angeordnet ist, wobei die Austrittsöffnungen (12, 14) in bezug zur Achse des Handstücks (1) seitlich gerichtet sind, dadurch **gekennzeichnet**, daß das Handstück (1) ein langgestrecktes Kopfstück (9) trägt, das an seinem freien Ende eine Scheibe (10) aufweist, in der die Austrittsöffnungen (12, 14) angeordnet sind und die mit einem die Austrittsöffnungen (12, 14) umgebenden, an die zu reinigenden Zähne anlegbaren Spritzschutz (16) versehen ist.

2. Strahlgerät nach Anspruch 1, dadurch gekennzeichnet, daß sich die Austrittsöffnung (14) für den Wasserstrahl und die Austrittsöffnung (12) für den strahlmittelbeladenen Druckluftstrahl ringförmig umgeben.

3. Strahlgerät nach Anspruch 1 oder 2, dadurch gekennzeichnet, daß der Spritzschutz (16) als umgebende gummielastische Schürze ausgebildet ist.

4. Strahlgerät nach Anspruch 3, dadurch gekennzeichnet, daß die Schürze an ihrem freien Rand konturiert ist.

5. Strahlgerät nach Anspruch 1 oder 2, dadurch gekennzeichnet, daß der Spritzschutz aus einer Vielzahl von Borsten (18) besteht.

6. Strahlgerät nach einem der Ansprüche 1 bis 5, dadurch gekennzeichnet, daß der Spitzschutz (16) an einer auswechselbaren Platte der Scheibe (10) befestigt ist.

7. Strahlgerät nach einem der Ansprüche 1 bis 6, dadurch gekennzeichnet, daß das Handstück (1) einen Schalter (6) zum Ein- und Ausschalten einer Wasser- und Druckluftzufuhr (3, 4) trägt.

8. Strahlgerät nach einem der Ansprüche 1 bis 7, dadurch gekennzeichnet, daß das Kopfstück (9) aufsteckbar ausgebildet ist.
